# EUROPEAN PATENT APPLICATION

(11) **EP 4 845 178 A1**
(43) Date of publication of application: **25.11.2026**
(21) Application number: 25805936.9
(22) Date of filing: 31.03.2025
(51) Int. Cl.: H04Q 11/00

(54) **EXTERNAL LIGHT SOURCE BACKUP METHOD AND DEVICE**

(71) Applicant: New H3C Technologies Co., Ltd., Hangzhou, Zhejiang 310052 (CN)
(72) Inventor: The designation of the inventor has not yet been filed
(74) Representative: Bandpay & Greuter
(86) International application number: PCT/CN2025/086105
(87) International publication number: WO 2026/207655

(57) **Abstract**

The present disclosure provides an external light source backup method and apparatus. In an example, a switching device includes: a processor, M microcontroller units (MCUs), M optical engines, and two external light source groups, with each external light source group including M main external light sources and N-M backup external light sources. Here, for any external light source group: the M MCUs are connected to the Inter-Integrated Circuit (I²C) pins of each external light source via a multiplexer; the M input ends of the multiplexer are connected to the M output ends in a one-to-one correspondence; the M MCUs are connected to the low-speed control pins of each external light source via a logic gating chip; the M input ends of the logic gating chip are connected to the M output ends in one-to-one correspondence; the M optical engines are connected to the optical channels of each external light source via an optical switch; the optical switch is to connect the M external light sources and the M optical engines in a one-to-one correspondence via optical paths.

## Description

### TECHNICAL FIELD

The present disclosure relates to electronic device technology, particularly relates to a method and an apparatus for external light source backup based on.

### BACKGROUND

Co-packaged Optics (CPO) involves encapsulating the switching chip and the optical engine on the same substrate, with the optical engine positioned as close as possible to the switching chip to minimize high-speed electrical channel losses and impedance discontinuities.

In current CPO architectures, an external light source is employed to reduce heat generation from the optical module, and in the event of a light source fault, maintenance may be performed by replacing the light source.

### SUMMARY

The present disclosure provides an external light source backup method and apparatus to reduce the duration of channel fault caused by external light source faults.

The present disclosure provides a switching apparatus, including:
a processor, M microcontroller units (MCUs), M optical engines, and two external light source groups, with each external light source group including N external light sources, the N external light sources including M main external light sources and N-M standby external light sources, where N > M > 1; wherein:
the processor is connected to each of the M MCUs;
the M MCUs are communicatively connected to the M optical engines in one-to-one correspondence;
for any external light source group, the M MCUs are connected to the Inter-Integrated Circuit (I²C) pins of each external light source in the group via a multiplexer; the multiplexer includes N input ends and M output ends, with the N input ends respectively connected to the I²C pins of different external light sources in the group, and the M output ends respectively connected to different MCUs; the M input ends among the N input ends are communicatively connected to the M output ends in one-to-one correspondence;
for any external light source group, the M MCUs are connected to the low-speed control pins of each external light source in the group via a logic gating chip; the logic gating chip includes N input ends and M output ends with the N input ends respectively connected to the same type of low-speed control pins of different external light sources in the group, and the M output ends respectively connected to different MCUs; the M input ends among the N input ends are communicatively connected to the M output ends in one-to-one correspondence;
for any external light source group, the M optical engines are connected to the optical channels of each external light source in the group via an optical switching device; the optical switching device is to communicatively connect M external light sources in the group and the M optical engines in one-to-one correspondence through optical paths.

The present disclosure provides an external light source backup method, the method including:
for any external light source group, upon detecting a fault in a main external light source within the external light source group, controlling the optical switching device connected to the external light source group to disconnect optical paths between the faulty main external light source and the M optical engines, and to communicatively connect one backup external light source in the external light source group and the M optical engines through optical paths;
controlling the multiplexer connected to the external light source group to disconnect the connection between a first target input end and a first target output end, and to communicatively connect a second target input end to the first target output end; wherein, the first target input end is the input end of the multiplexer connected to the faulty main external light source, the first target output end is the output end that was communicatively connected to the first target input end before the fault in the main external light source, and the second target input end is one of the input ends of the multiplexer connected to the backup external light source;
controlling the logic gating chip connected to the external light source group to disconnect the connection between a third target input end and a second target output end, and to communicatively connect a fourth target input end to the second target output end; wherein, the third target input end is the input end of the logic gating chip connected to the faulty main external light source, the second target output end is the output end that was communicatively connected to the third target input end before the fault in the main external light source, and the fourth target input end is one of the input ends of the logic gating chip connected to the backup external light source.

As may be seen from the above technical solutions, by introducing backup external light sources and grouping the external light sources, with each group including M main external light sources and N-M backup external light sources, the multiplexer is to achieve I²C connectivity between MCUs and external light sources, the logic gating chip is to achieve low-speed control signal connectivity between MCUs and external light sources, and the optical switching device is to achieve optical channel connectivity between optical engines and external light sources, therefore, in the event of a fault in a main external light source, the multiplexer, logic gating chip, and optical switching device may be to perform switching of the backup external light source, which may reduce the duration of channel fault caused by external light source faults compared to traditional solutions that directly replace the faulty main external light source fault.

### BRIEF DESCRIPTION OF THE DRAWINGS

FIG. 1 is a schematic diagram of an exemplary switching apparatus of the present disclosure;
FIG. 2 is a schematic diagram of an exemplary optical switch of the present disclosure;
FIG. 3 is a schematic diagram of an exemplary Co-packaged Optics (CPO) switch of the present disclosure;
FIG. 4 is a schematic diagram of an exemplary connection relationship of a multiplexer 3511 of the present disclosure;
FIG. 5 is a schematic diagram of an exemplary connection relationship of a logic gating chip 3512 of the present disclosure;
FIG. 6 is a schematic diagram of an exemplary connection relationship of an optical switch 3513 of the present disclosure;
FIG. 7 is a schematic diagram of an exemplary external light source backup of the present disclosure.

### DETAILED DESCRIPTION

To enable those skilled in the art to better understand the technical solutions in the applications of the present disclosure and make the aforementioned objectives, features, and advantages of the applications of the present disclosure more readily comprehensible, the technical solutions in the applications of the present disclosure are further elaborated in detail below in conjunction with the accompanying drawings.

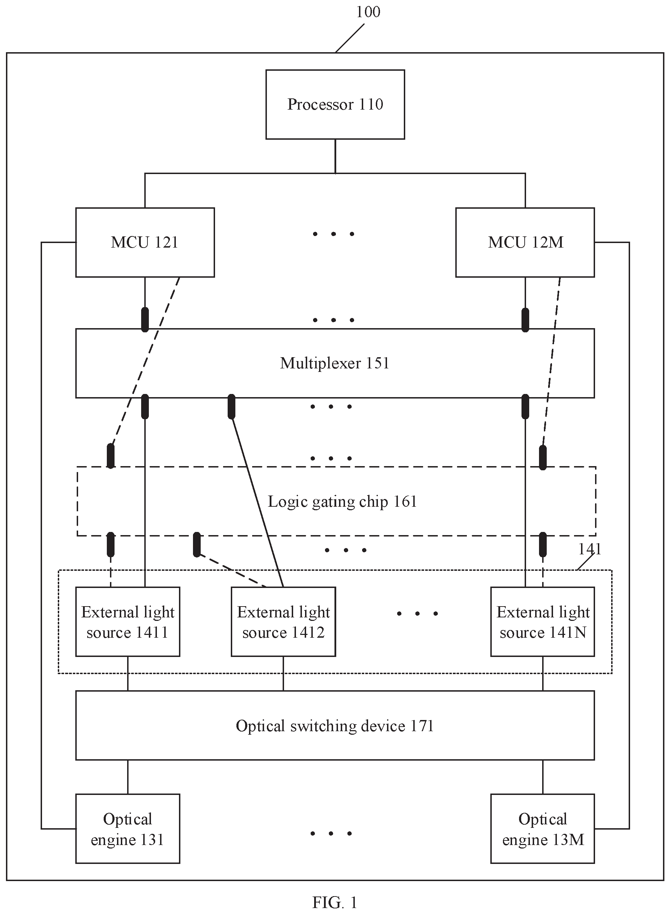

FIG. 1 is a schematic diagram of a switching apparatus provided in an application of the present disclosure. As shown in FIG. 1, the switching apparatus 100 may include: a processor 110, M microcontroller units (MCUs) 121-12M, M optical engines 131-13M, and two external light source groups, with each external light source group including N external light sources, the N external light sources comprising M main external light sources and N-M standby external light sources, where N > M > 1. In this way, the two external light source groups have the same number of main external light sources and the same number of backup external light sources. The number of MCUs and the number of optical engines are the same as the number of main external light sources in each external light source group. Each external light source group has one or more backup external light sources.

The number of backup external light sources in an external light source group may be set according to requirements, which may be less than, equal to, or greater than the number of main external light sources. However, since the probability of multiple main external light sources in the same external light source group failing in quick succession within a short period is low in practical scenarios, the number of backup external light sources in an external light source group may be set to one.

To more intuitively display the connection relationships among the MCUs, optical engines, and external light sources, only one external light source group is shown in FIG. 1, and the connection of the other external light source group may be inferred by analogy.

As shown in FIG. 1, the external light source group 141 includes N external light sources 1411-141N.

The processor 110 is connected to each of the M MCUs 121-12M.

The M MCUs 121-12M are communicatively connected to the M optical engines 131-13M in one-to-one correspondence.

For the external light source group 141, the M MCUs 121-12M are connected to the Inter-Integrated Circuit (I²C) pins of each external light source 1411-141N in the group via a multiplexer 151. The multiplexer 151 includes N input ends and M output ends. The N input ends are respectively connected to the I²C pins of different external light sources in the external light source group 141, and the M output ends are respectively connected to different MCUs; the M input ends among the N input ends are communicatively connected to the M output ends in one-to-one correspondence.

For the external light source group 141, the M MCUs 121-12M are connected to the low-speed control pins of each external light source 1411-141N in the group via a logic gating chip.

An external light source may include various types of low-speed control pins. For example, the low-speed control pins of an external light source may include five different types corresponding to initialization, interrupt, presence, gating, or reset modes. For different types of low-speed control pins of an external light source, the MCUs may be connected to the low-speed control pins of that type via different logic gating chips.

To more intuitively display the connection between the MCUs and the low-speed control pins of the external light sources, FIG. 1 only shows the connection relationship between the MCUs and one type of low-speed control pins of the external light sources, and the connection relationships for other types of low-speed control pins may be inferred by analogy.

As shown in FIG. 1, the M MCUs 121-12M are connected to the low-speed control pins of each external light source 1411-141N in the group via the logic gating chip 161.

The logic gating chip 161 includes N input ends and M output ends. The N input ends are respectively connected to the same type of low-speed control pins of different external light sources in the external light source group 141, and the M output ends are respectively connected to different MCUs; the M input ends among the N input ends are communicatively connected to the M output ends in one-to-one correspondence.
for the external light source group 141, the M optical engines 131-13M are connected to the optical channels of each external light source 1411-141N in the group via an optical switching device 171. The optical switching device 171 is to connect M external light sources in the external light source group 141 and the M optical engines 131-13M in one-to-one correspondence through optical paths.

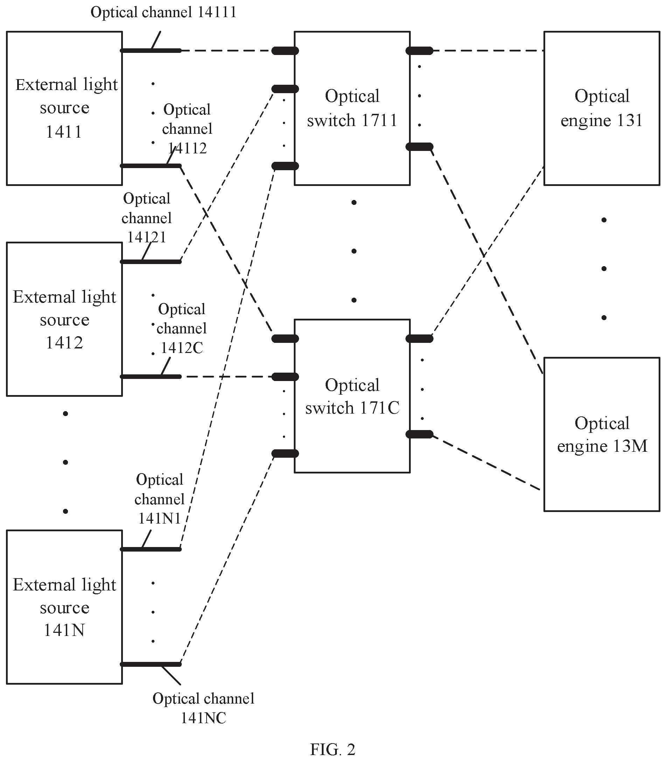

In the two external light source groups, all main and backup external light sources have the same number of optical channels. The number of optical switches in the optical switching device is equal to the number of optical channels of each main/backup external light source. The sum of the number of main external light sources and the number of backup external light sources in each external light source group is equal to the number of input ends of each optical switch, and the number of main external light sources in each external light source group is equal to the number of output ends of each optical switch. As shown in FIG. 2, each main/backup external light source includes C optical channels. The external light source 1411 includes optical channels 14111-1411C, the external light source 1412 includes optical channels 14121-1412C, ..., and the external light source 141N includes optical channels 141N1-141NC. The optical switching device 171 includes C optical switches 1711-171C of the same number. Each optical switch includes N input ends and M output ends. Each of the N input ends is connected to one respective optical channel of a different one of the external light sources, and the optical channels of the different external light sources connected to the same optical switch correspond to the same wavelength. Each of the M output ends is connected to different one of the optical engines; the M input ends are communicatively connected to the M output ends in one-to-one correspondence.

In the applications of the present disclosure, to reduce the duration of channel fault caused by external light source faults, backup external light sources may be introduced. In the event of a fault in a main external light source, the backup external light source may be switched to replace the faulty external light source, enabling rapid re-establishment of the link.

Considering that MCUs may only recognize two external light sources typically, the external light sources may be divided into two groups, with each group including main and backup external light sources, and backup and fault switching of external light sources may be performed within each external light source group.

For an external light source group, the I²C pin selection and switching may be achieved through a multiplexer, the low-speed control pin selection and switching may be realized via a logic gating chip, and the optical channel selection and switching may be accomplished through an optical switching device.

The multiplexer may include N input ends, which are respectively connected to the I²C pins of each external light source within the same external light source group. The multiplexer may also include M output ends, which are respectively connected to different MCUs. M input ends among the N input ends connected to the I²C pins of the main external light sources are communicatively connected to the M output ends in one-to-one correspondence.

The logic gating chip may include N input ends, which are respectively connected to the same type of low-speed control pins of each external light source within the same external light source group. The logic gating chip also includes M output ends, which are respectively connected to different MCUs.

In the initialization state, among the N input ends of the multiplexer, the M input ends connected to the I²C pins of the main external light sources are communicatively connected to the M output ends in one-to-one correspondence.

Among the N input ends of the logic gating chip, the M input ends connected to the low-speed control pins of the main external light sources are communicatively connected to the M output ends in one-to-one correspondence.

The optical switching device communicatively connects the main external light sources to the optical engines in one-to-one correspondence.

In the event of a fault in a main external light source, the faulty main external light source may be turned off. Besides, the output end of the multiplexer corresponding to the faulty main external light source may be switched to communicatively connect to the input end connected to the I²C pin of the backup external light source.

The output of the logic gating chip corresponding to the faulty main external light source may be switched to communicatively connect to the input end connected to the low-speed control pin of the backup external light source.

For the optical engine corresponding to the faulty main external light source, the optical switch may be used to switch its connection to the backup external light source.

In the case of a fault in any main external light source, the faulty main external light source may be turned off, and an input end connected to the I²C pin of a backup external light source may be switched to communicatively connect to the corresponding output end.

In the example shown in FIG. 1, by introducing backup external light sources and grouping the external light sources, with each group including M main external light sources and N-M backup external light sources, the I²C connection between the MCUs and the external light sources may be achieved through the multiplexer for an external light source group. The low-speed control signal connection between the MCUs and the external light sources may be realized via the logic gating chip, and the optical channel connection between the optical engines and the external light sources may be accomplished via the optical switching device. Thus, in the event of a fault in a main external light source, the switching to the backup external light source may be achieved through the multiplexer, the logic gating chip, and the optical switching device, which may reduce the duration of channel fault caused by external light source faults compared with the traditional solution of directly replacing the faulty main external light source .

To enable those skilled in the art to better understand the technical solutions provided in the applications of the present disclosure, the following describes the technical solutions provided in the applications of the present disclosure with reference to specific examples.

To reduce the duration of channel fault caused by external light source faults in a Co-Packaged Optics (CPO) switch, backup external light sources may be introduced. In the event of a fault in a main external light source, the backup external light source may be used to replace the faulty one, enabling rapid re-establishment of the link.

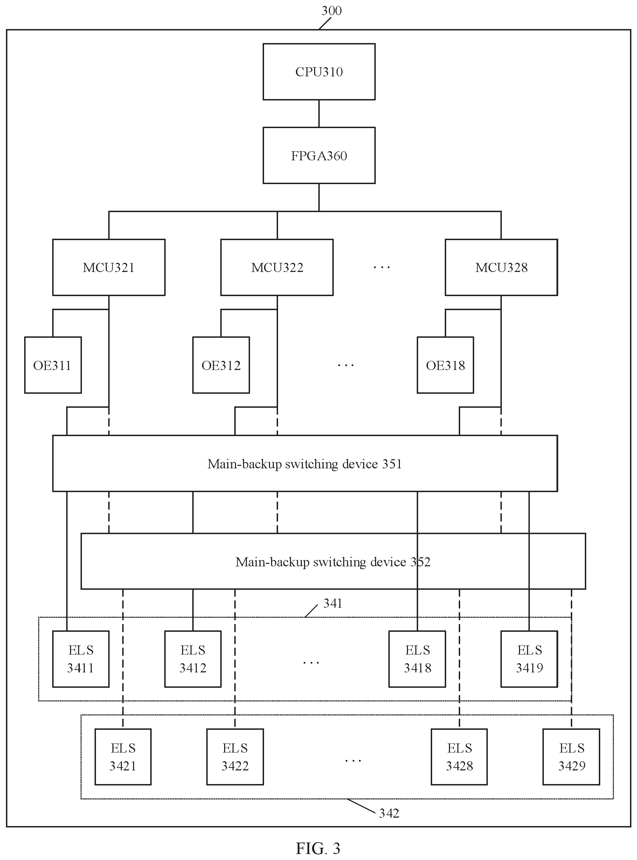

As shown in FIG. 3, the CPO switch 300 includes a CPU (Center Process Unit) 310, 8 MCUs 321-328, 8 optical engines (OEs) 331-338, and two External Laser Source (ELS) groups 341-342. ELS group 341 includes ELSs 3411-3419, with ELSs 3411-3418 being main ELSs and ELS 3419 being a backup ELS. ELS group 342 includes ELSs 3421-3429, with ELSs 3421-3428 being main ELSs and ELS 3429 being a backup ELS.

The CPU 310 may manage each MCU through FPGA 360 selection.

The MCUs 321-328 and optical engines 331-338 are connected to the ELSs in group 341 through the main-backup switching device 351, and they are connected to the ELSs in group 342 through the main-backup switching device 352.

The main-backup switching devices 351/352 may include a multiplexer, a logic gating chip, and an optical switching device.

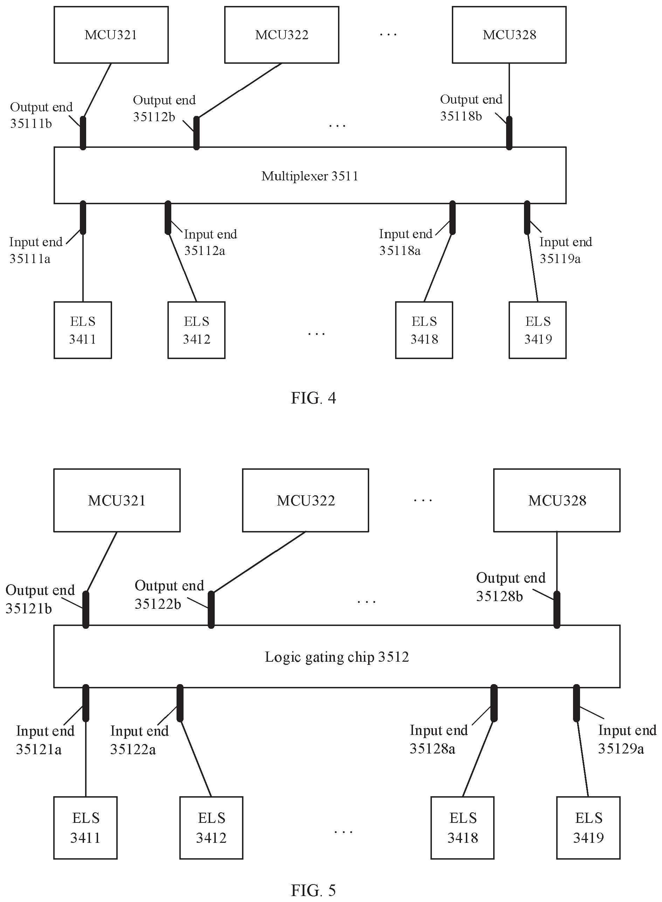

As shown in FIG. 4, the MCUs 321-328 may be connected to the I²C pins of ELSs 3411-3419 through the multiplexer 3511.

The multiplexer 3511 includes 9 input ends 35111a-35119a, which are respectively connected to the I²C pins of ELSs 3411-3419.

It also includes 8 output ends 35111b-35118b, which are respectively connected to MCUs 321-328.

As shown in FIG. 5, the MCUs 321-328 may be connected to the low-speed control pins of ELSs 3411-3419 through the logic gating chip 3512.

For different types of low-speed control pins, the MCUs may be connected to the low-speed control pins of that type of ELS through different logic gating chips.

The logic gating chip 3512 includes 9 input ends 35121a-35129a, which are respectively connected to the same type of low-speed control pins of ELSs 3411-3419.

The logic gating chip 3512 also includes 8 output ends 35121b-35128b, which are respectively connected to MCUs 321-328.

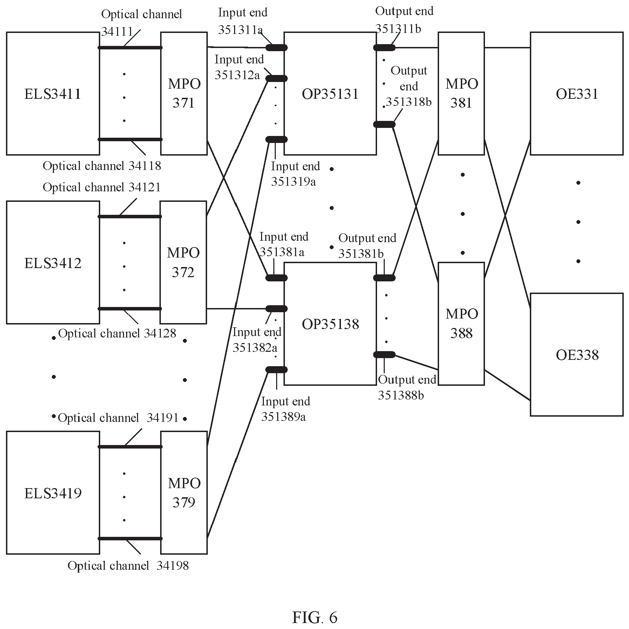

As shown in FIG. 6, an ELS includes eight optical channels, with each channel corresponding to a different wavelength. The optical switching device 3513 includes eight optical switches 35131-35138.

As depicted in FIG. 6, ELS3411 includes optical channels 34111-34118, ELS3412 includes optical channels 34121-34128, and ELS3419 includes optical channels 34191-34198. The optical channels of other ELSs are not shown in FIG. 6.

Each optical switch includes nine input ends, each of which is for connecting to the optical channels of the same wavelength from ELSs 3411-3419. Each optical switch includes eight output ends, each of which is for connecting to optical engines 331-338.

As shown in FIG. 6, optical switch 35131 includes input ends 351311a-351319a and output ends 351311b-351318b. optical switch 35138 includes input ends 351381a-351389a and output ends 351381b-351388b. The input ends and the output ends of other optical switches are not shown in FIG. 6.

ELSs may be connected to optical switches via connectors such as Multi-fiber Push On connectors (MPOs), and optical switches may be connected to optical engines through connectors.

As shown in FIG. 6, ELSs 3411-3419 are respectively connected to optical switches 35131-35138 through MPOs 371-379, and optical switches 35131-35138 are respectively connected to optical engines 331-338 through MPOs 381-388.

In the initialization state, the first eight input ends 35111a-35118a of the multiplexer 3511 are communicatively connected to the eight output ends 35111b-35118b in one-to-one correspondence. The first eight input ends 35111a-35118a are respectively in one-to-one correspondence to ELSs 3411-3418, and the eight output ends 35111b-35118b are respectively in one-to-one correspondence to MCUs 311-318.

The first eight input ends 35121a-35128a of the logic gating chip 3512 are communicatively connected to the eight output ends 35121b-35128b in one-to-one correspondence. The first eight input ends 35121a-35128a are respectively in one-to-one correspondence to ELSs 3411-3418, and the eight output ends 35121b-35128b are respectively in one-to-one correspondence to MCUs 311-318.

For each optical switch, the first eight input ends are communicatively connected to the eight output ends in one-to-one correspondence, and MPOs 371-379 are connected to MPOs 381-388 in one-to-one correspondence.

For example, as shown in FIG. 6, the first eight input ends 351311a-351318a of optical switch 35131 are communicatively connected to the eight output ends 351311b-351318b in one-to-one correspondence.

In the event of an ELS fault, on the one hand, each optical switch may switch the input end used by the faulty ELS to the ninth input end.

On the other hand, the faulty ELS may be turned off, the ninth input end of the multiplexer may be switched to communicatively connect to the output end corresponding to the faulty ELS, and the ninth input end of the logic gating chip may be switched to communicatively connect to the output end corresponding to the faulty ELS.

By adopting this approach, optical path switching is performed first, followed by electrical path switching, which enhances the safety of fault switching.

For instance, suppose MCU321 detects abnormal optical power or a fault in ELS3411 and reports the ELS3411 fault to CPU310.

CPU310 controls MCU321 to turn off ELS3411 and controls the logic gating chip 3512 to switch the ninth input end 35129a to communicatively connect to the first output end 35121b, then sends low-speed control signals to ELS3419 through MCU321 to control its presence.

After completing the above processing, CPU310 may control the multiplexer 3511 to switch the ninth input end 35119a to communicatively connect to the first output end 35111b, thereby connecting the backup external light source ELS3419 to MCU321.

In response to determining MCU321 detects ELS3419 and ELS3419 completes its initialization, CPU310 may control each optical switch in the optical switching device to switch the ninth input end to communicatively connect to the first output end.

By adopting this method, fault switching between the main and backup external light sources may be achieved without modifying the logic, architecture, or firmware of the MCUs, which effectively reduces the duration of channel fault caused by external light source faults, resulting that the channel fault time may be reduced from minutes to milliseconds, thereby improving business stability compared with the traditional solution of directly replacing the faulty external light source.

In this application, in response to any ELS having failed, information may be reported, such as alarm information, to inform the user that the backup ELS is currently in use, which allows the customer to inspect and replace the faulty ELS.

In response to determining the user has completed the replacement of the faulty ELS, CPU310 detects the ELS insertion event, such as detecting the insertion of a new ELS3411 and its power supply event, and may perform a switch-back to exit the backup state.

CPU310 controls MCU321 to turn off ELS3418 and controls the logic gating chip 3512 to switch the first input end 35121a back to communicatively connect to the first output end 35121b. It then sends low-speed control signals to the new ELS3411 through MCU321 to control its presence.

After completing the above processing, CPU310 may control the multiplexer 3511 to switch the first input end 35111a back to communicatively connect to the first output end 35111b, thereby connecting the newly inserted ELS to MCU321.

In response to determining MCU321 detects the newly inserted ELS and the newly inserted ELS completes its initialization, CPU310 may control each optical switch in the optical switch unit to switch the first input end back to communicatively connect to the first output end.

By adopting this method, switch-back of the external light source may be achieved, reverting the device from the backup external light source to the main external light source.

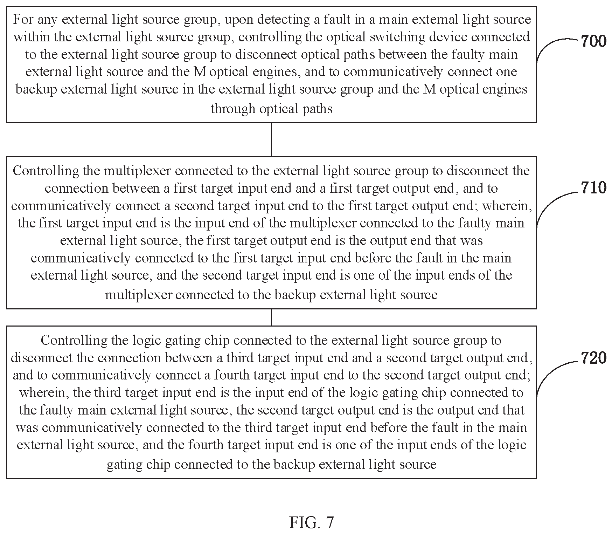

The present disclosure also provides an external light source backup method. As shown in FIG. 7, which is a schematic diagram of an external light source backup method provided by an application of the present disclosure. As illustrated in FIG. 7, this external light source backup method may include processes 700 to 720:

Process 700: For any external light source group, in the case where a fault of the main external light source in this external light source group is detected, control the optical switch connected to this external light source group to disconnect the corresponding optical paths between the failed main external light source and M optical engines, and communicatively connect one backup external light source in this external light source group and the M optical engines through optical paths.

In the applications of the present disclosure, in response to determining the MCU of the switching device detects an abnormal optical power or a fault in the external light source, the MCU of the switching device may report the external light source fault to the CPU.

In the case where the CPU receives the notification of the external light source fault reported by the MCU, it may determine that there is an external light source fault.

To reduce the channel fault time caused by external light source faults in the switch, in the case where there is a main external light source fault, the failed external light source may be replaced by a backup external light source to quickly re-establish the link.

To ensure the safety of the fault switching, an approach of first performing optical path switching and then performing electrical path switching may be adopted for switching between the failed main external light source and the backup external light source.

Accordingly, for any external light source group, in the case where a fault of the main external light source in this external light source group is detected, optical path switching between the failed main external light source and the backup external light source may be performed first.

The optical switch connected to this external light source group may be controlled to disconnect the corresponding optical paths between the failed main external light source and the M optical engines, and communicatively connect one backup external light source in this external light source group and the M optical engines through optical paths.

Process 710: control the multiplexer connected to this external light source group to disconnect the connection between the first target input end and the first target output end, and communicatively connect the second target input end to the first target output end; where the first target input end is the input end of the multiplexer connected to the failed main external light source, the first target output end is the output end that was communicatively connected to the first target input end before the fault of the main external light source, and the second target input end is one of the input ends of the multiplexer connected to the backup external light source.

Process 720: Control the logic gating chip connected to this external light source group to disconnect the connection between the third target input end and the second target output end, and communicatively connect the fourth target input end to the second target output end; where the third target input end is the input end of the logic gating chip connected to the failed main external light source, the second target output end is the output end that was communicatively connected to the second target input end before the fault of the main external light source, and the fourth target input end is one of the input ends of the logic gating chip connected to the backup external light source.

In the applications of the present disclosure, in the case where optical path switching between the failed main external light source and the backup external light source has been completed, electrical path switching between the failed main external light source and the backup external light source may then be performed.

The electrical path switching between the main external light source and the backup external light source may include channel switching of the multiplexer and channel switching of the logic gating chip.

For the channel switching of the multiplexer, the multiplexer connected to this external light source group may be controlled to disconnect the connection between the first target input end and the first target output end, and communicatively connect the second target input end to the first target output end.

For the channel switching of the logic gating chip, the logic gating chip connected to this external light source group may be controlled to disconnect the connection between the third target input end and the second target output end, and communicatively connect the fourth target input end to the second target output end.

By adopting the above approach, switching between the failed main external light source and the backup external light source may be achieved without modifying the logic, architecture, and firmware of the MCU, effectively reducing the channel fault time caused by external light source faults. Compared with the implementation scheme of directly replacing the failed external light source, the channel fault time may be reduced from minutes to milliseconds, improving business stability.

In the applications of the present disclosure, in the case where a main external light source fault is determined, information may also be reported, for example, alarm information may be reported to inform the user that the currently used light source is a backup external light source, so that the customer may detect and replace the failed external light source.

In the case where the user has completed the replacement of the failed external light source, the CPU of the switching device detects an insertion event of a new main external light source and a power supply event of the newly inserted external light source, and may perform a switch-back to exit the backup state. The switch-back process between the backup external light source and the new main external light source may include:

Control the logic gating chip connected to this external light source group to disconnect the connection between the fourth target input end and the second target output end, and communicatively connect the third target input end to the second target output end;

Control the multiplexer connected to this external light source group to disconnect the connection between the second target input end and the first target output end, and communicatively connect the first target input end to the second target output end;

Control the optical switch connected to this external light source group to disconnect the corresponding optical paths between the backup external light source and the M optical engines, and communicatively connect the new main external light source and the M optical engines through optical paths.

By adopting the above approach, switch-back of the external light source may be achieved, reverting the device from the backup external light source to the main external light source.

Those skilled in the art will readily conceive of other implementations of the present disclosure after considering the specification and practicing the present disclosure. The present disclosure is intended to cover any variations, uses, or adaptive changes that follow the general principles of the present disclosure and include common knowledge or conventional technical means in the technical field of the present disclosure that are not disclosed herein. The description and examples are considered to be illustrative only, and the true scope and spirit of the present disclosure are indicated by the following claims.

## Claims

1. A switching apparatus, wherein the apparatus comprising: a processor, M microcontroller units (MCUs), M optical engines, and two external light source groups, with each external light source group comprising N external light sources, the N external light sources comprising M main external light sources and N-M standby external light sources, where N > M > 1; wherein:
the processor is connected to each of the M MCUs ;
the M MCUs are communicatively connected to the M optical engines in one-to-one correspondence;
the M MCUs are connected to I²C pins of each external light source in the group via a multiplexer; the multiplexer comprises N input ends and M output ends, with the N input ends respectively connected to the I²C pins of different external light sources in the group, and the M output ends respectively connected to different MCUs; M input ends among the N input ends are communicatively connected to the M output ends in one-to-one correspondence;
the M MCUs are connected to low-speed control pins of each external light source in the group via a logic gating chip; the logic gating chip comprises N input ends and M output ends with the N input ends respectively connected to a same type of low-speed control pins of different external light sources in the group, and the M output ends respectively connected to different MCUs; M input ends among the N input ends are communicatively connected to the M output ends in one-to-one correspondence;
the M optical engines are connected to optical channels of each external light source in the group via an optical switching device; the optical switching device is to communicatively connect M external light sources in the group and the M optical engines in one-to-one correspondence through optical paths.

2. The apparatus of claim 1, wherein:
each external light source comprises C optical channels;
each optical switching device comprises C optical switches;
each optical switch comprises N input ends and M output ends; each of the N input ends is connected to one respective optical channel of a different one of the external light sources, the optical channels of the different external light sources connected to the optical switch correspond to a same wavelength, each of the M output ends of the optical switch is connected to a different one of the optical engines; M input ends among the N input ends of each optical switch and the M output ends are communicatively connected in one-to-one correspondence.

3. The apparatus of claim 1, wherein:
for any external light source group, in response to no main external light source in the external light source group having failed, among the N input ends of the multiplexer connected to the external light source group, the M input ends connected to the main external light sources are communicatively connected to the M output ends of the multiplexer in one-to-one correspondence;
among the N input ends of the logic gating chip connected to the external light source group, the M input ends connected to the main external light sources are communicatively connected to the M output ends of the logic gating chip in one-to-one correspondence;
the optical switching device connected to the external light source group communicatively connects the main external light sources and the M optical engines in one-to-one correspondence through optical paths.

4. The apparatus of claim 3, wherein: for any external light source group, in response to any main external light source in the external light source group having failed, among the N input ends of the multiplexer connected to the external light source group, the input end connected to the failed main external light source is disconnected from a corresponding output end of the multiplexer, and one input end of the multiplexer connected to the standby external light source is communicatively connected to the corresponding output end;
among the N input ends of the logic gating chip connected to the external light source group, the input end connected to the failed main external light source is disconnected from a corresponding output end of the logic gating chip, and one input end connected to the standby external light source of the logic gating chip is communicatively connected to the corresponding output end;
the optical switching device connected to the external light source disconnects the corresponding optical paths between the failed main external light source and the M optical engines, and communicatively connects one standby external light source and the M optical engines through optical paths.

5. The apparatus of claim 4, wherein: in response to a replacement of the failed main external light source being completed, among the N input ends of the multiplexer connected to the external light source group, the input end connected to the standby external light source is disconnected from the corresponding output end of the multiplexer, and an input end connected to a new main external light source of the multiplexer is communicatively connected to the corresponding output end of the multiplexer;
among the N input ends of the logic gating chip connected to the external light source group, the input end connected to the standby external light source is disconnected from the corresponding output end of the logic gating chip, and an input end connected to the new main external light source of the logic gating chip is connected to the corresponding output end of the logic gating chip;
the optical switching device connected to the external light source disconnects the corresponding optical paths between the standby external light source and the M optical engines, and communicatively connects the new main external light source and the M optical engines through optical paths.

6. The apparatus of claim 2, wherein: for any external light source group, in response to no main external light source in the external light source group having failed, in the optical switching device connected to the external light source group, the M input ends of each optical switch connected to the main external light sources are communicatively connected to the M output ends in one-to-one correspondence.

7. The apparatus of claim 6, wherein: for any external light source group, in response to any main external light source in the external light source group having failed, in the optical switching device connected to the external light source group, the input end of each optical switch connected to the failed main external light source is disconnected from the corresponding output end of the optical switch, and one input end of each optical switch connected to the standby external light source is communicatively connected to the corresponding output end of the optical switch.

8. The apparatus of claim 7, wherein: in response to a replacement of the failed main external light source being completed, in the optical switching device connected to the external light source group, the input end of each optical switch connected to the standby external light source is disconnected from the corresponding output end of the optical switch, and one input end of each optical switch connected to a new main external light source is communicatively connected to the corresponding output end of the optical switch.

9. The apparatus of claim 1, wherein: N-M = 1.

10. An external light source backup method, applied to the switching apparatus of any one of claims 1 to 9, the method comprises:
for any external light source group, upon detecting a fault in a main external light source within the external light source group, controlling the optical switching device connected to the external light source group to disconnect optical paths between the faulty main external light source and the M optical engines, and to communicatively connect one backup external light source in the external light source group and the M optical engines through optical paths;
controlling the multiplexer connected to the external light source group to disconnect the connection between a first target input end and a first target output end, and to communicatively connect a second target input end to the first target output end; wherein, the first target input end is the input end of the multiplexer connected to the faulty main external light source, the first target output end is the output end that was communicatively connected to the first target input end before the fault in the main external light source, and the second target input end is one of the input ends of the multiplexer connected to the backup external light source;
controlling the logic gating chip connected to the external light source group to disconnect the connection between a third target input end and a second target output end, and to communicatively connect a fourth target input end to the second target output end; wherein, the third target input end is the input end of the logic gating chip connected to the faulty main external light source, the second target output end is the output end that was communicatively connected to the second target input end before the fault in the main external light source, and the fourth target input end is one of the input ends of the logic gating chip connected to the backup external light source.

11. The method of claim 10, wherein, the method further comprises:
in response to detecting an event of inserting a new main external light source and a power supply event of the new main external light source, controlling the logic gating chip connected to the external light source group to disconnect the connection between the fourth target input end and the second target output end, and connect the third target input end to the second target output end;
controlling the multiplexer connected to the external light source group to disconnect the connection between the second target input end and the first target output end, and communicatively connect the first target input end to the first target output end;
controlling the optical switching device connected to the external light source group to disconnect the corresponding optical paths between the standby external light source and the M optical engines, and communicatively connect the new main external light source and the M optical engines through optical paths.
